# EUROPEAN PATENT SPECIFICATION

(11) **EP 3 049 997 B1**
(45) Date of publication and mention of the grant of the patent: **08.08.2018**
(21) Application number: 14868834.4
(22) Date of filing: 26.09.2014
(51) Int. Cl.: G06K 9/00, G06F 21/32, G01N 29/265

(54) **BIOMETRIC SENSORS FOR PERSONAL DEVICES**
BIOMETRISCHE SENSOREN FÜR PERSONALISIERTE VORRICHTUNGEN
CAPTEURS BIOMÉTRIQUES POUR DES DISPOSITIFS PERSONNELS

(30) Priority: 26.09.2013 US 201314037668
(43) Date of publication of application: 03.08.2016
(73) Proprietor: Intel Corporation, Santa Clara, CA 95054 (US)
(72) Inventor: PANT, Mondira D., Westborough, Massachusetts 01581 (US); ABDELMONEUM, Mohamed A., Portland, Oregon 97229 (US); KARNIK, Tanay, Portland, Oregon 97229 (US); PISENTI, Stephen, Portland, Oregon 97231 (US); POISNER, David I., Carmichael, California 95608 (US); MAHAMEED, Rashed, Santa Clara, CA 95054 (US)
(74) Representative: Goddar, Heinz J.
(86) International application number: PCT/US2014/057581
(87) International publication number: WO 2015/088626

(56) References cited:
- US-A1- 2002 150 282
- US-A1- 2006 129 839
- US-A1- 2008 025 581
- US-A1- 2008 069 412
- US-A1- 2010 262 014
- US-A1- 2012 159 599
- US-A1- 2012 240 223
- US-A1- 2013 222 349
- US-B1- 8 447 273
- Pavlo Fesenko: "Capacitive micromachined ultrasonic transducer (cMUT) for biometric applications Thesis for the Degree of Erasmus Mundus Master of Nanoscience and Nanotechnology", Master thesis at the University of Göteborg, Sweden, 1 January 2012 (2012-01-01), pages 1-46, XP055342874, Göteborg, Sweden Retrieved from the Internet: URL:http://publications.lib.chalmers.se/re cords/fulltext/166084.pdf [retrieved on 2017-02-07]

## Description

### BACKGROUND

### Technical Field

Embodiments generally relate to fingerprint sensing. More particularly, embodiments relate to the use of flexible substrates to deploy ultrasonic fingerprint sensors in curved structures and/or pre-existing design elements.

US 2008/0069412 A1 discloses a system of recognizing fingerprint or handprint. The system of document D1 includes a scanner with a contoured surface allowing more fingerprint or handprint data to be captured, a circuit for converting analog data of a captured fingerprint image into a digital image, and a fingerprint security application for verifying said digital image against stored fingerprint templates.

US 2010/0262014 A1 discloses a method of manufacturing ultrasonic scanners. The method includes integrating a flexible electronic device (e.g. an IC) and a flexible ultrasonic transducer (e.g. a portion of a circular CMUT array) with a flexible member. The IC, the transducer, and the flexible member can form a flexible subassembly which is rolled up to form an ultrasonic scanner.

US 2002/0150282 A1 discloses a method of detecting a fingerprint of a user and one or more features of an authentication article (e.g. a precious gem) related to the user by using a fingerprint sensor, and authenticating the user based on indications derived from the detected fingerprint and one or more features of the authentication article.

Pavlo Fesenko, Capacitive micromachined ultrasonic transducer (cMUT) for biometric applications. Master thesis at the University of Göteborg, Sweden, 1 January 2012, pages 1-46, discloses a structure of cMUT and a method of fabricating the cMUT.

### Discussion

Fingerprint sensors may be used to identify and/or authenticate users in a variety of settings. Ultrasonic imaging systems may provide better accuracy and/or quality relative to optical scanners due to an ability to more effectively identify fingerprint ridges (as well as the areas between ridges) in sub-optimal conditions (e.g., environmental contamination). Conventional ultrasonic solutions, however, may be limited to bulky probe designs.

### BRIEF DESCRIPTION OF THE DRAWINGS

The various advantages of the embodiments of the present invention will become apparent to one skilled in the art by reading the following specification and appended claims, and by referencing the following drawings, in which:
FIG. 1A is an illustration of an example of an ultrasonic transducer array according to an embodiment;
FIG. IB is an illustration of an example of an ultrasonic transducer array deployed in a curved structure according to an embodiment;
FIGs. 2A-2C are illustrations of examples of security devices according to embodiments;
FIG. 3 is an illustration of an example of a computing platform according to an embodiment;
FIG. 4A and 4B are illustrations of examples of button according to embodiments;
FIG. 5 is a block diagram of an example of a fingerprint identification architecture according to an embodiment;
FIG. 6 is a flowchart of an example of a method of fabricating a fingerprint identification system according to an embodiment;
FIGs. 7A and 7B are flowcharts of examples of methods of authenticating users according to embodiments; and
FIG. 8 is a block diagram of an example of a system including a fingerprint identification architecture according to an embodiment.

### DETAILED DESCRIPTION

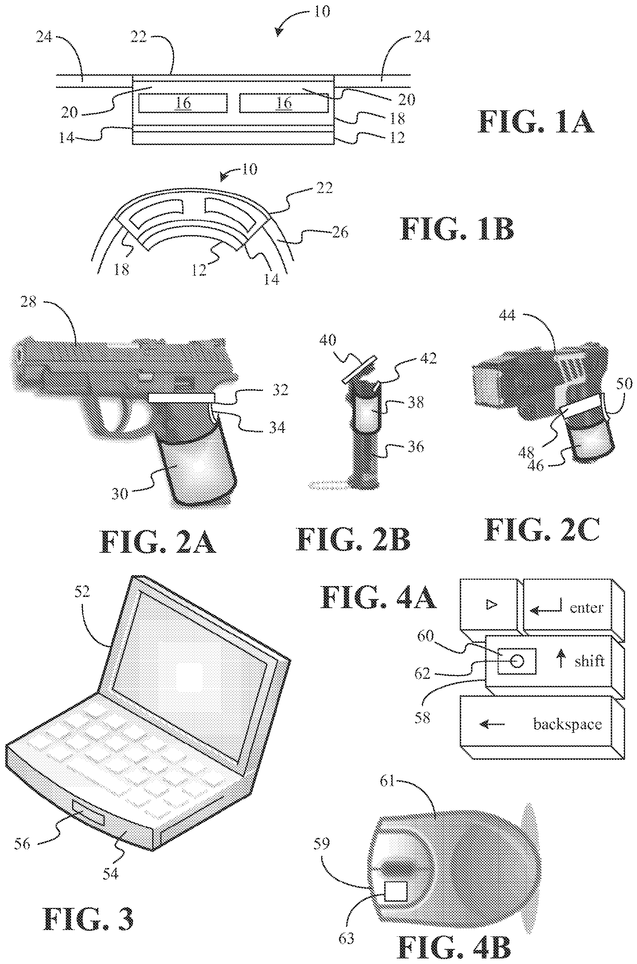

FIG. 1A shows an ultrasonic transducer array 10 that may be used to identify fingerprints. In the illustrated example, a bottom electrode 14 (e.g., metallic layer) may be deposited on a flexible substrate 12 such as, for example, a polymer layer. In addition, a set of vacuum cavities 16 may be formed within a layer 18 above the bottom electrode 14, wherein membranes 20 may rest on sidewalls above the vacuum cavities 16. In the illustrated example, a top electrode 22 (e.g., metallic layer) is deposited on the membranes 20 of the layer 18. In one example, the ultrasonic transducer array 10 is a capacitive micromachined ultrasonic transducer (CMUT) array. Other layer configurations and/or manufacturing techniques may be used to fabricate the ultrasonic transducer array 10.

The top electrode 22 may generally function as a read surface for the identification of fingerprints. More particularly, the top electrode 22 and the bottom electrode 14 may form capacitors around the vacuum cavities 16, wherein application of a direct current (DC) and/or alternating current (AC) voltage across the vacuum cavities 16 may cause the membranes 20 to vibrate. The return echo may be captured and analyzed to identify a fingerprint, a toeprint and/or heartbeat characteristics of a human finger and/or toe. For example, a binary determination may be made for each capacitor as to whether the corresponding membrane 20 is resonating after a given excitation. The binary results may be used to create a highly accurate map of the ridges and valleys of the fingerprint and/or toeprint, as well as the unique heartbeat trace of an individual.

The flexible substrate 12 may be initially deposited on a photoresist layer (not shown) that rests on a silicon carrier wafer (not shown). In such a case, the silicon carrier wafer may be removed and the photoresist layer may be etched away as final steps to the fabrication process. As will be discussed in greater detail, the use of the flexible substrate 12 may enable the ultrasonic transducer array 10 to be installed and/or deployed in a wide variety of settings and/or devices.

For example, the ultrasonic transducer array 10 may be embedded in an external component 24 such as, for example, the skin of a computing platform, the grip of a security device (e.g., handgun, knife, electroshock weapon, pepper spray, etc.), the handle of a vehicle door, and so forth. The external component 24 may also be a button/key of a keyboard, wherein the button/key has an additional function that is separate from identification of fingerprints.

FIG. 1B demonstrates that the ultrasonic transducer array 10 may be embedded in an external component 26 that has a curved profile. Because the ultrasonic transducer array 10 includes the flexible substrate 12, the top electrode 22 (e.g., the read surface) of the ultrasonic transducer array 10 conforms to the curved profile, in the example shown. Accordingly, the illustrated ultrasonic transducer array 10 provides relatively high accuracy and quality while being uniquely suitable for a large number of applications.

For example, FIGs. 2A-2B show security device configurations in which ultrasonic transducer arrays may be used to scan fingerprints and may be built into the security device so that they may not be easily bypassed. In particular, FIG. 2A shows a side view of a handgun 28 having a grip region 30 that may contain an embedded ultrasonic transducer array, a muzzle region 32 that may contain electronics (e.g., processors, microcontrollers, semiconductor chips) to process the signals from the ultrasonic transducer array, and an interconnect region 34 to contain a wired connection between the electronics and the ultrasonic transducer array. Thus, the embedded ultrasonic transducer array may conform to the curved shape of the grip region 30 while maintaining the ability to identify fingerprints at a high level of accuracy.

Moreover, FIG. 2B shows a side view of a pepper spray container 36 having a head region 38 that may contain an embedded ultrasonic transducer array, a trigger region 40 that may contain electronics to process the signals from the ultrasonic transducer array and an interconnect region 42 to contain a wired connection between the electronics and the ultrasonic transducer array. Accordingly, the embedded ultrasonic transducer array may conform to the curved shape of the head region 38 while maintaining the ability to identify fingerprints at a high level of accuracy.

Additionally, FIG. 2C shows a side perspective view of an electroshock weapon 44 (e.g., TASER) having a grip region 46 that may contain an embedded ultrasonic transducer array, a muzzle region 48 that may contain electronics to process the signals from the ultrasonic transducer array and an interconnect region 50. Again, the embedded ultrasonic transducer array may conform to the curved shape of the grip region 30 while maintaining the ability to identify fingerprints at a high level of accuracy.

As will be discussed in greater detail, the electronics may selectively activate/deactivate one or more features of the security devices based on the fingerprint identification and/or user authentication results. For example, the ability to fire the handgun 28 (FIG. 2A), the pepper spray 36 (FIG. 2B) and/or the electroshock weapon 44 (FIG. 2C) may all be contingent upon successful identification of the fingerprint of a user of those devices as well as the successful authentication of that user. Other information, such as signals from position sensors and/or radio modules may also be used to identify fingerprints and/or authenticate users.

FIG. 3 shows a computing platform 52 having a housing (e.g., enclosure, skin) with a curved profile, wherein an ultrasonic transducer array 56 is embedded in the housing of the computing platform 52 such that the read surface of the ultrasonic transducer array 56 conforms to the curved profile. As discussed above with regard to the security devices, one or more features (e.g., specific applications, read/write capabilities, etc.) of the computing platform 52 may be selectively activated/deactivated based on the fingerprint identification and/or user authentication results.

FIG. 4A shows a button 58 of a keyboard, wherein an ultrasonic transducer array 60 is embedded in the button. Multiple or all buttons of the keyboard may have an ultrasonic transducer array 60 embedded in the button, enabling the ability to perform continuous authentication of the user as they type on the keyboard, wherein detection of a different user subsequently typing on the keyboard might immediately deactivate the user session, or the content that the user created by typing might be annotated as coming from them (for example, online test taking, document authorship, ...).

The button 58, which may or may not include a curved profile, may generally have a function that is separate from the identification of fingerprints. In the illustrated example, the separate function is that of a shift key on a keyboard. Thus, the illustrated approach incorporates the fingerprint reader into an existing design element. Moreover, embedding the ultrasonic transducer array 60 into the button 58 may enable existing usage patterns to be leveraged - for example, pushing the button 58 (or any other button on the keyboard) may already be used to wake a device from a power saving mode (e.g., sleep, hibernate, etc.). In such a case, pushing the button 58 may also initiate an authentication of the user based on the fingerprint that is read during the push of the button 58, wherein the authentication may bypass other authentication methods such as password or PIN (personal identification number) based solutions.

The illustrated button 58 also includes a target indicator (e.g., logo, illustration) 62 adjacent to the read surface of the ultrasonic transducer array 60. The target indicator 62 may visually inform the user as to where on the external profile of the button 58 the user may place his or her finger to conduct a fingerprint scan, and where on the external profile of the button 58 the user may place his or her finger to activate the other function of the button 58 (e.g., the shift function). Other buttons such as, for example, Home buttons on smart phones and/or tablet computers, may also use the illustrated approach.

FIG. 4B shows a button 59 of a mouse 61, wherein an ultrasonic transducer array 63 is embedded in the button area of the mouse. The button 59, which may or may not include a curved profile, may generally have a function that is separate from the identification of fingerprints. In the illustrated example, the separate function is that of a mouse click button. Thus, the illustrated approach incorporates the fingerprint reader into an existing design element. Moreover, embedding the ultrasonic transducer array 63 into the button 59 may enable existing usage patterns to be leveraged - for example, pushing the button 59 may already be used to open an email or make an online purchase. In such a case, pushing the button 59 may also initiate an authentication of the user based on the fingerprint that is read during the push of the button 59, wherein the authentication might be used to confirm that the user is authorized to perform the intended action of the mouse click, such as viewing an email or authorizing the purchase to proceed.

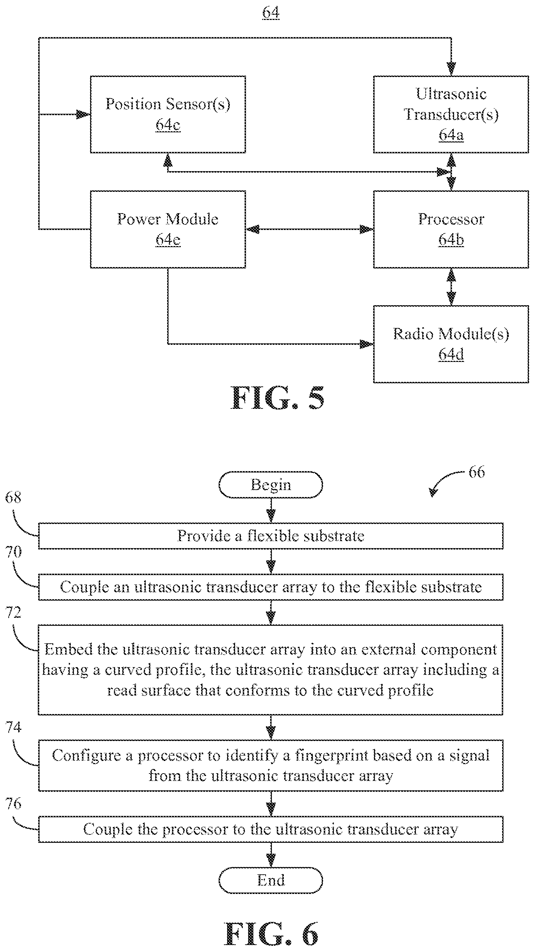

Turning now to FIG. 5, a fingerprint identification architecture (64a-64e) is shown. In the illustrated example, one or more ultrasonic transducers 64a are coupled to a processor 64b (e.g., microcontroller, host processor, input output module/IOM) that is configured to identify fingerprints based on signals from the ultrasonic transducers 64a. The architecture 64 may also include one or more position sensors 64c (e.g., geographic location sensor, inertial sensor, etc.), wherein the processor 64b may use signals from the position sensors 64c to conduct user authentications. For example, a geographic location sensor such as a Global Positioning System (GPS) sensor might output the coordinates of the system containing the architecture 64. In such a case, the processor 64b may compare those coordinates to known location data to determine if the system is in an approved place (e.g., home, work, particular city/state, etc.).

Moreover, an inertial sensor such as an accelerometer or gyroscope may output the orientation of the system containing the architecture 64. In such a case, the processor 64b may compare that orientation to known orientations determine if the system is being held properly (e.g., pointing away from the user, up, down, etc.). If the signals from the position sensor 64c indicate that, for example, the system is not located in an approved place or the system not being held properly, the processor 64b may deactivate one or more features of the system as a safety measure. Signals from one or more radio modules 64d (e.g., WiFi/Wireless Fidelity, e.g., Institute of Electrical and Electronics Engineers/IEEE 802.11-2007, Wireless Local Area Network/LAN Medium Access Control (MAC) and Physical Layer (PHY) Specifications, Bluetooth, e.g., IEEE 802.15.1-2005, Wireless Personal Area Networks, etc.) may also be used to determine position and other characteristics that may be useful in the fingerprint identification and/or user authentication processes. Moreover, after a predetermined number of unsuccessful attempts to "login", a signal from the radio module may be used to send a "panic" or "attempted break-in" signal to a central monitoring system. The illustrated architecture 64 also includes a power module 64e to manage, balance, supply and/or harvest power for the architecture 64.

FIG. 6 shows a method 66 of fabricating a fingerprint identification system. Portions of the method 66 may be implemented using well documented semiconductor fabrication, hardware manufacturing, programming, surface mount technology (SMT) solder reflow, bonding, assembly, trace layout design, and other techniques, or any combination thereof. In addition, portions of the method 66 may be implemented via a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

Illustrated block 68 provides a flexible substrate such as, for example a polymer layer deposited on a photoresist layer, which is deposited on a silicon carrier wafer. An ultrasonic transducer array may be coupled to the flexible substrate at block 70, wherein the silicon carrier wafer and photoresist layer may be removed from the flexible substrate once the ultrasonic transducer array has been coupled to the flexible substrate. Block 72 may embed the ultrasonic transducer array into an external component having a curved profile. In one example, the ultrasonic transducer array includes a read surface that conforms to the curved profile. If the external component is a button having a function that is separate from identification of fingerprints, block 72 might also involve disposing (e.g., printing, stamping, engraving, etc.) a target indicator on the curved profile adjacent to the read surface. In addition, a processor may be configured at block 74 to identify fingerprints based on signals from the ultrasonic transducer array. The processor may be coupled to the ultrasonic transducer array at block 76.

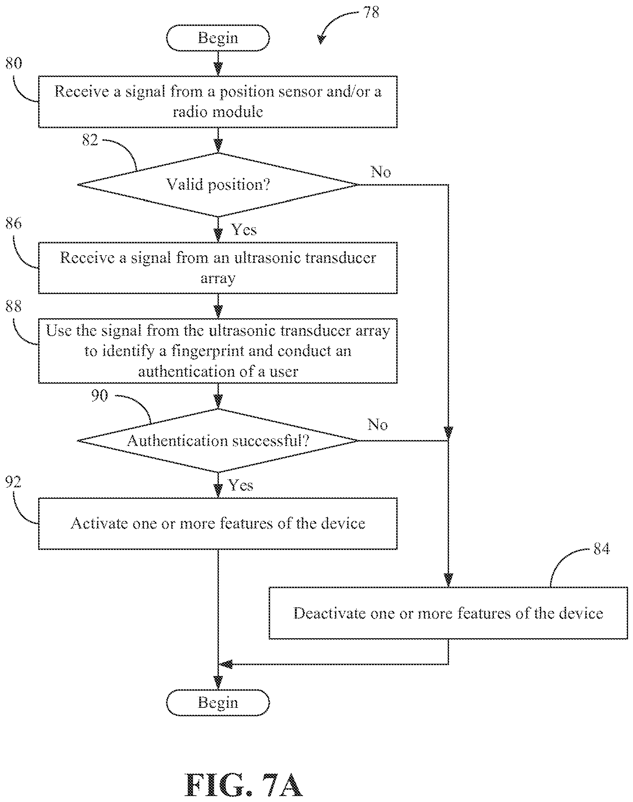

Turning now to FIG. 7A, a method 78 of authenticating users is shown. The method 78 may be implemented as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof. Illustrated processing block 80 receives a signal from a position sensor and/or a radio module of a mobile device, wherein a determination may be made at block 82 as to whether the mobile device is in a valid position based on the received signal. As already noted, the position might be a geographic position, an orientation, or any combination thereof. If the mobile device is not in a valid position, block 84 may deactivate one or features of the device.

If, on the other hand, the device is in a valid position, illustrated block 86 receives a signal from an ultrasonic transducer array embedded in an external component of the mobile device. The external component may include, for example, a grip of a security device, a skin of a computing platform, a button, and so forth. As already noted, the external component may have a curved profile, wherein the ultrasonic transducer array is embedded in the external component and includes a read surface that conforms to the curved profile.

The signal from the ultrasonic transducer array may be used at block 88 to identify a fingerprint and conduct an authentication of a user of the device. Thus, the illustrated approach effectively uses the signal from the position sensor and/or radio module to trigger the authentication. The authentication may involve comparing the identified fingerprint to the fingerprints of one or more known individuals. In this regard, the authentication system may be trained. For example, the training may be particularly advantageous for systems in which the ultrasonic transducer array is embedded in a button, as some individuals may not always type on a keyboard or mouse button using the "same" finger every time. If it is determined at block 90 that the authentication was unsuccessful (e.g., no fingerprint match or a match to an unauthorized individual was found), block 84 may deactivate one or more features of the device. If the authentication was successful (e.g., a fingerprint match to an authorized individual was found), illustrated block 92 activates one or more features of the device.

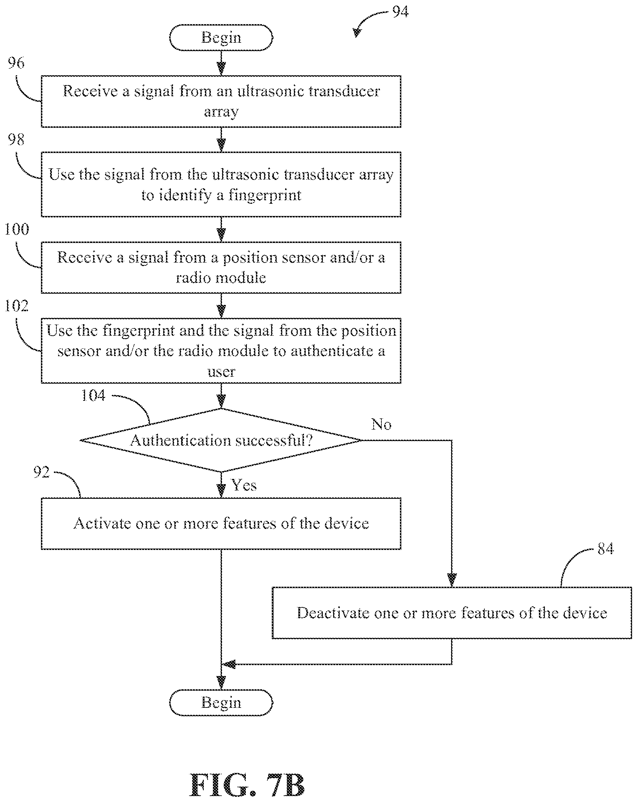

FIG. 7B shows an alternative method 94 of authenticating users. The method 78 may be implemented as a set of logic instructions stored in a machine- or computer-readable storage medium such as RAM, ROM, PROM, firmware, flash memory, etc., in configurable logic such as, for example, PLAs, FPGAs, CPLDs, in fixed-functionality logic hardware using circuit technology such as, for example, ASIC, CMOS or TTL technology, or any combination thereof. Illustrated block 96 receives a signal from an ultrasonic transducer array, wherein the signal may be used at block 98 to identify a fingerprint. Additionally, a signal from a position sensor and/or a radio module may be received at block 100. Block 102 may use the fingerprint and the signal from the position sensor and/or radio module to authenticate (e.g., verify the identity of) the user. Thus, for example, if the signal from the position sensor indicates that the device is in an unknown geographic location, then the authentication may fail. Additionally, if the fingerprint does not match an authorized individual, the authentication may fail.

If it is determined at block 104 that the authentication was unsuccessful, illustrated block 84 deactivates one or more features of the mobile device. If, on the other hand, the authentication was successful, one or more features of the mobile device may be activated at block 92.

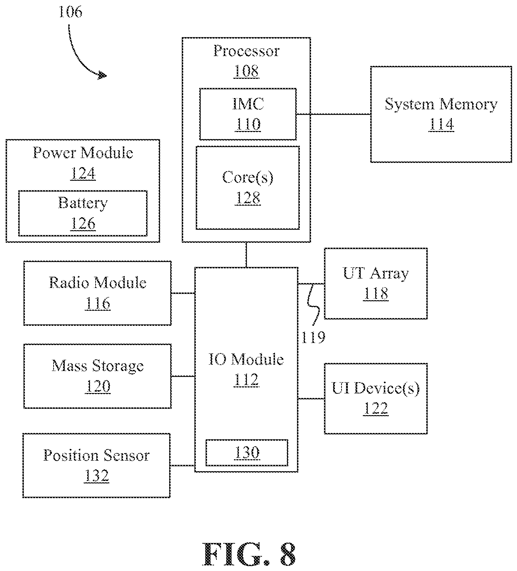

Turning now to FIG. 8, a computing platform 106 is shown. The platform 106 may be part of a device having computing functionality (e.g., PDA, laptop, tablet computer, desktop computer), communications functionality (e.g., wireless smart phone), imaging functionality, media playing functionality (e.g., smart television/TV), or any combination thereof (e.g., mobile Internet device/MID). In the illustrated example, the platform 106 includes a processor 108, an integrated memory controller (IMC) 110, an input output (IO) module 112, system memory 114, a radio module 116, an ultrasonic transducer (UT) array 118, mass storage 120 (e.g., optical disk, hard disk drive/HDD, flash memory), one or more user interface (UI) devices 122, one or more position sensors 132 and a power module 124 having a battery 126 to supply power to the platform 106. The processor 108 may include a core region with one or several processor cores 128.

The illustrated IO module 112, sometimes referred to as a Southbridge or South Complex of a chipset, functions as a host controller and communicates with the radio module 116, which could provide off-platform communication functionality for a wide variety of purposes such as, for example, cellular telephone (e.g., Wideband Code Division Multiple Access/W-CDMA (Universal Mobile Telecommunications System/UMTS), CDMA2000 (IS-856/IS-2000), etc.), WiFi, 4G LTE (Fourth Generation Long Term Evolution), Bluetooth, WiMax (e.g., IEEE 802.16-2004, LAN/MAN Broadband Wireless LANS), Global Positioning System (GPS), spread spectrum (e.g., 900 MHz), and other radio frequency (RF) telephony purposes. Other standards and/or technologies may also be implemented in the radio module 116. The IO module 112 may also include one or more wireless hardware circuit blocks to support such functionality. Although the processor 108 and IO module 112 are illustrated as separate blocks, the processor 108 and IO module 112 may be implemented as a system on chip (SoC) on the same semiconductor die.

The system memory 114 may include, for example, double data rate (DDR) synchronous dynamic random access memory (SDRAM, e.g., DDR3 SDRAM JEDEC Standard JESD79-3C, April 2008) modules. The modules of the system memory 114 may be incorporated into a single inline memory module (SIMM), dual inline memory module (DIMM), small outline DIMM (SODIMM), and so forth.

The illustrated IO module 112 includes logic 130 to identify fingerprints based on signals from the UT array 118, which may have a wired connection 119 to the IO module 112 that includes leads, connectors, contacts, and so forth. The logic 130 may also use the identified fingerprints and signals from the one or more position sensors 132 and/or the radio module 116 to conduct authentications of users of the platform 106. In one example, the logic 130 deactivates one or more features of the platform 106 if a given authentication is unsuccessful and activates one or more features of the platform 106 if the authentication is successful.

### Additional Notes and Examples

Example 1 may include a fingerprint identification system comprising a flexible substrate, an ultrasonic transducer array coupled to the flexible substrate and a processor coupled to the ultrasonic transducer array, the processor to identify a fingerprint based on a signal from the ultrasonic transducer array. The system may also include an external component having a curved profile, wherein the ultrasonic transducer array is embedded in the external component and includes a read surface that conforms to the curved profile.
Example 2 may include the system of Example 1, wherein the external component includes one of a grip of a security device or a skin of a computing platform.
Example 3 may include the system of Example 1, wherein the external component includes a button having a function that is separate from identification of the fingerprint.
Example 4 may include the system of Example 3, wherein the button includes a target indicator adjacent to the read surface.
Example 5 may include the system of any one of Examples 1 to 4, further including a position sensor coupled to the processor, the processor to use the fingerprint and a signal from the position sensor to conduct an authentication of a user.
Example 6 may include the system of Example 5, wherein the processor is to deactivate one or more features of a system containing the apparatus if the authentication is unsuccessful.
Example 7 may include the system of Example 5, wherein the signal from the position sensor is to trigger the authentication.
Example 8 may include the system of Example 5, wherein the processor is to use the signal from the position sensor to verify an identity of the user.
Example 9 may include the system of Example 5, wherein the position sensor includes one or more of a geographic location sensor and an inertial sensor.
Example 10 may include the system of Example 1, wherein the ultrasonic transducer array is a capacitive micromachined ultrasonic transducer (CMUT) array.
Example 11 may include the system of Example 1, further including a semiconductor chip that contains the processor, and a wired connection coupled to the semiconductor chip and the ultrasonic transducer array.
Example 12 may include the system of Example 1, further including a power module to manage power delivered to the apparatus, and a radio module coupled to the processor.
Example 13 may include a method of fabricating a fingerprint identification system, comprising providing a flexible substrate, coupling an ultrasonic transducer array to the flexible substrate, configuring a processor to identify a fingerprint based on a signal from the ultrasonic transducer array and coupling the processor to the ultrasonic transducer array.
Example 14 may include the method of Example 13, further including embedding the ultrasonic transducer array into an external component having a curved profile, wherein the ultrasonic transducer array includes a read surface that conforms to the curved profile.
Example 15 may include the method of Example 14, wherein the ultrasonic transducer array is embedded into one of a button having a function that is separate from identification of the fingerprint, a grip of a security device or a skin of a computing platform.
Example 16 may include the method of Example 15, further including disposing a target indicator on the curved profile adjacent to the read surface.
Example 17 may include a fingerprint identification apparatus comprising a flexible substrate, an ultrasonic transducer array coupled to the flexible substrate and a processor coupled to the ultrasonic transducer array, the processor to identify a fingerprint based on a signal from the ultrasonic transducer array.
Example 18 may include the apparatus of Example 17, further including a position sensor coupled to the processor, the processor to use the fingerprint and a signal from the position sensor to conduct an authentication of a user.
Example 19 may include the apparatus of Example 18, wherein the processor is to deactivate one or more features of a system containing the apparatus if the authentication is unsuccessful.
Example 20 may include the apparatus of Example 18, wherein the signal from the position sensor is to trigger the authentication.
Example 21 may include the apparatus of Example 18, wherein the processor is to use the signal from the position sensor to verify an identity of the user.
Example 22 may include the apparatus of Example 18, wherein the position sensor includes one or more of a geographic location sensor and an inertial sensor.
Example 23 may include the apparatus of Example 17, wherein the ultrasonic transducer array is a capacitive micromachined ultrasonic transducer (CMUT) array.
Example 24 may include the apparatus of Example 17, further including a semiconductor chip that contains the processor, and a wired connection coupled to the semiconductor chip and the ultrasonic transducer array.
Example 25 may include the apparatus of any one of Examples 17 to 24, further including a power module to manage power delivered to the apparatus, and a radio module coupled to the processor.
Example 26 may include an apparatus to fabricate a fingerprint identification system, comprising means for performing the method of any one of Examples 13 to 16.

Thus, techniques described herein may enable secure personal identification in a low cost, low power solution that scales across multiple applications and devices. Additionally, any need for users to remember multiple passwords or experience delayed access to devices may be obviated. The instantaneous and secure access may be particularly advantageous in personal security scenarios involving weaponry, self defense sprays, etc. For example, "smart" personal handheld security devices may automatically limit their usage to their rightful owners or against specifically designated targets. Moreover, embedding ultrasonic transducer arrays in buttons having functions separate from fingerprint identification may facilitate enhanced security with no impact on the overall form factor design (e.g., physical size of the button is unaltered from standard buttons).

Embodiments of the present invention are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments of the present invention are not limited to the same. As manufacturing techniques (e.g., photolithography) evolve over time, it is expected that devices of smaller size could be manufactured. In addition, well known power/ground connections to IC chips and other components may or may not be shown within the figures, for simplicity of illustration and discussion, and so as not to obscure certain aspects of the embodiments of the invention. Further, arrangements may be shown in block diagram form in order to avoid obscuring embodiments of the invention, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments of the invention, it should be apparent to one skilled in the art that embodiments of the invention can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

Those skilled in the art will appreciate from the foregoing description that the broad techniques of the embodiments of the present invention can be implemented in a variety of forms. Therefore, while the embodiments of this invention have been described in connection with particular examples thereof, the true scope of the embodiments of the invention should not be so limited since other modifications will become apparent to the skilled practitioner upon a study of the drawings, specification, and following claims.

## Claims

1. A system comprising:
a flexible substrate (12);
an ultrasonic transducer array (10, 64a, 118) coupled to the flexible substrate (12);
a processor (64b, 108) coupled to the ultrasonic transducer array (10, 64a, 118), the processor (64b, 108) to identify a fingerprint based on a signal from the ultrasonic transducer array (10, 64a, 118); and
an external component (24, 26) including a curved profile, wherein the ultrasonic transducer array (10, 64a, 118) is embedded in the external component (24, 26) and includes a read surface (22) that conforms to the curved profile,
**characterized in that** the system further including a position sensor (64c, 132) coupled to the processor (64b, 108), wherein the processor (64b, 108) determines whether the system is in a valid position based on a signal from the position sensor (64c, 132), and if determined so, authenticates the user based on the fingerprint.

2. The system of claim 1, wherein the external component (24, 26) includes one of a grip of a security device or a skin of a computing platform.

3. The system of claim 1, wherein the external component (24, 26) includes a button having a function that is separate from identification of the fingerprint.

4. The system of claim 3, wherein the button includes a target indicator adjacent to the read surface.

5. The system of claim 1, wherein the processor (64b, 108) is to deactivate one or more features of the system if the authentication is unsuccessful.

6. The system of claim 1, wherein if the processor (64b, 108) determines that the system is not in a valid position, the processor (64b, 108) deactivates one or more features of the system without proceeding with authenticating the user.

7. The system of claim 1, wherein the processor (64b, 108) is to use the signal from the position sensor (64c, 132) to verify an identity of the user.

8. The system of claim 1, wherein the position sensor (64c, 132) includes a geographic location sensor and an inertial sensor.

9. The system of claim 1, wherein the ultrasonic transducer array (10, 64a, 118) is a capacitive micromachined ultrasonic transducer (CMUT) array.

10. The system of claim 1, further including:
a semiconductor chip that contains the processor (64b, 108); and
a wired connection coupled to the semiconductor chip and the ultrasonic transducer array (10, 64a, 118).

11. The system of claim 1, further including:
a power module (64e, 124) to manage power delivered to the system; and
a radio module (64d, 116) coupled to the processor.

12. A method of providing a device including a fingerprint identification system, comprising:
providing a flexible substrate (12);
coupling an ultrasonic transducer array (10, 64a, 118) to the flexible substrate (12); and
configuring a processor (64b, 108) to identify a fingerprint based on a signal from the ultrasonic transducer array (10, 64a, 118); and
coupling the processor (64b, 108) to the ultrasonic transducer array (10, 64a, 118),
**characterized in that** the method further comprising:
providing a position sensor (64c, 132);
coupling the processor (64b, 108) to the position sensor (64c, 132); and
configuring the processor (64b, 108) to determine whether the device is in a valid position based on a signal from the position sensor (64c, 132), and if determined so, authenticate the user based on the fingerprint.

13. The method of claim 12, further including embedding the ultrasonic transducer array (10, 64a, 118) into an external component (24, 26) having a curved profile, wherein the ultrasonic transducer array (10, 64a, 118) includes a read surface (22) that conforms to the curved profile.

14. The method of claims 12, wherein the processor (64b, 108) is configured to deactivate one or more features of the device without proceeding with authenticating the user if the processor (64b, 108) determines that the device is not in a valid position.

15. The method of claim 12, wherein the position sensor (64c, 132) includes a geographic location sensor and an inertial sensor.

## Patentansprüche

1. System, umfassend:
ein flexibles Substrat (12);
eine mit dem flexiblen Substrat (12) verbundene Ultraschallwandleranordnung (10, 64a, 118);
einen mit der Ultraschallwandleranordnung (10, 64a, 118) verbundenen Prozessor (64b, 108), wobei der Prozessor (64b, 108) einen Fingerabdruck auf der Grundlage eines Signals von der Ultraschallwandleranordnung (10, 64a, 118) identifiziert; und
eine ein gekrümmtes Profil beinhaltende externe Komponente (24, 26), wobei die Ultraschallwandleranordnung (10, 64a, 118) in der externen Komponente (24, 26) eingebettet ist und eine Lesefläche (22) beinhaltet, die sich an das gekrümmte Profil anpasst,
**dadurch gekennzeichnet, dass** das System weiterhin einen mit dem Prozessor (64b, 108) verbundenen Positionssensor (64c, 132) beinhaltet, wobei der Prozessor (64b, 108) auf der Grundlage eines Signals von dem Positionssensor (64c, 132) bestimmt, ob das System in einer gültigen Position ist, und wenn dies bestimmt ist, den Benutzer auf der Grundlage des Fingerabdrucks authentifiziert.

2. System nach Anspruch 1, wobei die externe Komponente (24, 26) einen eines Griffs einer Sicherheitsvorrichtung oder einer Außenhülle einer Computerplattform beinhaltet.

3. System nach Anspruch 1, wobei die externe Komponente (24, 26) eine Taste mit einer Funktion beinhaltet, die von der Identifizierung des Fingerabdrucks getrennt ist.

4. System nach Anspruch 3, wobei die Taste eine Zielanzeige neben der Lesefläche beinhaltet.

5. System nach Anspruch 1, wobei der Prozessor (64b, 108) eine oder mehrere Funktionen des Systems deaktiviert, wenn die Authentifizierung nicht erfolgreich ist.

6. System nach Anspruch 1, wobei der Prozessor (64b, 108) eine oder mehrere Funktionen des Systems ohne Fortfahren mit der Authentifizierung des Benutzers deaktiviert, wenn der Prozessor (64b, 108) bestimmt, dass das System nicht in einer gültigen Position ist.

7. System nach Anspruch 1, wobei der Prozessor (64b, 108) das Signal des Positionssensors (64c, 132) zum Verifizieren einer Identität des Benutzers verwendet.

8. System nach Anspruch 1, wobei der Positionssensor (64c, 132) einen Sensor für den geografischen Standort und einen Trägheitssensor beinhaltet.

9. System nach Anspruch 1, wobei die Ultraschallwandleranordnung (10, 64a, 118) eine Anordnung aus kapazitiven mikromechanischen Ultraschallwandlern (CMUT) ist.

10. System nach Anspruch 1, weiterhin umfassend:
einen Halbleiterchip, der den Prozessor (64b, 108) enthält; und
eine Drahtverbindung, die mit dem Halbleiterchip und der Ultraschallwandleranordnung (10, 64a, 118) verbunden ist.

11. System nach Anspruch 1, weiterhin umfassend:
ein Leistungsmodul (64e, 124) zum Verwalten der an das System abgegebenen Leistung; und
ein mit dem Prozessor verbundenes Funkmodul (64d, 116).

12. Verfahren zum Bereitstellen einer Vorrichtung, beinhaltend ein Fingerabdruck-Identifikationssystem, umfassend:
Bereitstellen eines flexiblen Substrats (12);
Verbinden einer Ultraschallwandleranordnung (10, 64a, 118) mit dem flexiblen Substrat (12);
Konfigurieren eines Prozessors (64b, 108) zum Identifizieren eines Fingerabdrucks auf der Grundlage eines Signals von der Ultraschallwandleranordnung (10, 64a, 118); und
Verbinden des Prozessors (64b, 108) mit der Ultraschallwandleranordnung (10, 64a, 118),
**dadurch gekennzeichnet, dass** das Verfahren weiterhin umfasst:
Bereitstellen eines Positionssensors (64c, 132);
Verbinden des Prozessors (64b, 108) mit dem Positionssensor (64c, 132); und
Konfigurieren des Prozessors (64b, 108) zum Bestimmen auf der Grundlage eines Signals von dem Positionssensor (64c, 132), ob die Vorrichtung in einer gültigen Position ist, und wenn dies bestimmt ist, Authentifizieren des Benutzers auf der Grundlage des Fingerabdrucks.

13. Verfahren nach Anspruch 12, weiterhin beinhalten und das Einbetten der Ultraschallwandleranordnung (10, 64a, 118) in einer externen Komponente (24, 26) mit einem gekrümmten Profil, wobei die Ultraschallwandleranordnung (10, 64a, 118) eine Lesefläche (22) beinhaltet, die sich an das gekrümmte Profil anpasst.

14. Verfahren nach Anspruch 12, wobei der Prozessor (64b, 108) dazu ausgelegt ist, eine oder mehrere Funktionen der Vorrichtung ohne Fortfahren mit der Authentifizierung des Benutzers zu deaktivieren, wenn der Prozessor (64b, 108) bestimmt, dass die Vorrichtung nicht in einer gültigen Position ist.

15. Verfahren nach Anspruch 12, wobei der Positionssensor (64c, 132) einen Sensor für den geografischen Standort und einen Trägheitssensor beinhaltet.

## Revendications

1. Système comprenant :
un substrat flexible (12) ;
un réseau de transducteurs à ultrasons (10, 64a, 118) couplé au substrat flexible (12) ;
un processeur (64b, 108) couplé au réseau de transducteurs à ultrasons (10, 64a, 118), le processeur (64b, 108) étant destiné à identifier une empreinte digitale sur la base d'un signal provenant du réseau de transducteurs à ultrasons (10, 64a, 118) ; et
un composant externe (24, 26) présentant un profil arrondi, dans lequel le réseau de transducteurs à ultrasons (10, 64a, 118) est intégré dans le composant externe (24, 26) et comprend une surface de lecture (22) qui correspond au profil arrondi,
**caractérisé en ce que** le système comprend en outre un capteur de position (64c, 132) couplé au processeur (64b, 108), dans lequel le processeur (64b, 108) détermine si le système se trouve ou non dans une position valide en se basant sur un signal provenant du capteur de position (64c, 132) et, s'il est déterminé que tel est le cas, authentifie l'utilisateur en se basant sur l'empreinte digitale.

2. Système selon la revendication 1, dans lequel le composant externe (24, 26) comprend soit une poignée d'un dispositif de sécurité, soit un revêtement d'une plate-forme informatique.

3. Système selon la revendication 1, dans lequel le composant externe (24, 26) comprend un bouton ayant une fonction qui est distincte de l'identification de l'empreinte digitale.

4. Système selon la revendication 3, dans lequel le bouton comprend un indicateur de cible adjacent à la surface de lecture.

5. Système selon la revendication 1, dans lequel le processeur (64b, 108) est destiné à désactiver une ou plusieurs caractéristiques du système si l'authentification est un échec.

6. Système selon la revendication 1, dans lequel, si le processeur (64b, 108) détermine que le système ne se trouve pas dans une position valide, le processeur (64b, 108) désactive une ou plusieurs caractéristiques du système sans procéder à une authentification de l'utilisateur.

7. Système selon la revendication 1, dans lequel le processeur (64b, 108) est destiné à utiliser le signal provenant du capteur de position (64c, 132) pour vérifier une identité de l'utilisateur.

8. Système selon la revendication 1, dans lequel le capteur de position (64c, 132) comprend un capteur d'emplacement géographique et un capteur inertiel.

9. Système selon la revendication 1, dans lequel le réseau de transducteurs à ultrasons (10, 64a, 118) est un réseau de transducteurs capacitifs micro-usinés à ultrasons (CMUT).

10. Système selon la revendication 1, comprenant en outre :
une puce à semi-conducteur qui contient le processeur (64b, 108) ; et
une connexion câblée couplée à la puce à semi-conducteur et au réseau de transducteurs à ultrasons (10, 64a, 118).

11. Système selon la revendication 1, comprenant en outre :
un module d'alimentation (64e, 124) destiné à gérer l'énergie délivrée au système ; et
un module radio (64d, 116) couplé au processeur.

12. Procédé de fourniture d'un dispositif comprenant un système d'identification d'empreintes digitales, consistant :
à fournir un substrat flexible (12) ;
à coupler un réseau de transducteurs à ultrasons (10, 64a, 118) au substrat flexible (12) ; et
à configurer un processeur (64b, 108) pour identifier une empreinte digitale sur la base d'un signal provenant du réseau de transducteurs à ultrasons (10, 64a, 118) ; et
à coupler le processeur (64b, 108) au réseau de transducteurs à ultrasons (10, 64a, 118),
**caractérisé en ce que** le procédé consiste en outre :
à fournir un capteur de position (64c, 132) ;
à coupler le processeur (64b, 108) au capteur de position (64c, 132) ; et
à configurer le processeur (64b, 108) pour déterminer si le dispositif se trouve ou non dans une position valide en se basant sur un signal provenant du capteur de position (64c, 132) et, s'il est déterminé que tel est le cas, pour authentifier l'utilisateur en se basant sur l'empreinte digitale.

13. Procédé selon la revendication 12, consistant en outre à intégrer le réseau de transducteurs à ultrasons (10, 64a, 118) dans un composant externe (24, 26) présentant un profil arrondi, dans lequel le réseau de transducteurs à ultrasons (10, 64a, 118) comprend une surface de lecture (22) qui correspond au profil arrondi.

14. Procédé selon la revendication 12, dans lequel le processeur (64b, 108) est configuré pour désactiver une ou plusieurs caractéristiques du dispositif sans procéder à l'authentification de l'utilisateur si le processeur (64b, 108) détermine que le dispositif ne se trouve pas dans une position valide.

15. Procédé selon la revendication 12, dans lequel le capteur de position (64c, 132) comprend un capteur d'emplacement géographique et un capteur inertiel.
